Europäisches Patentamt

(19) European Patent Office

Office européen des brevets

(11) Publication number: **0 234 680**
**B1**

(12) **EUROPEAN PATENT SPECIFICATION**

(45) Date of publication of patent specification: 04.07.90

(21) Application number: 87300139.0

(22) Date of filing: 08.01.87

(51) Int. Cl.⁵: **G 01 D 5/26, G 01 F 1/32**

(54) Processing sensor signals from light detectors.

(30) Priority: 21.01.86 US 820769

(43) Date of publication of application:
02.09.87 Bulletin 87/36

(45) Publication of the grant of the patent:
04.07.90 Bulletin 90/27

(84) Designated Contracting States:
DE FR GB IT SE

(56) References cited:
EP-A-0 165 697
GB-A-2 059 699
. GB-A-2 116 701

(73) Proprietor: THE BABCOCK & WILCOX
COMPANY
1010 Common Street, P.O. Box 60035
New Orleans, Louisiana 70160 (US)

(72) Inventor: Thompson, William Lee
15364 G.A.R. Highway
Montville Ohio 44064 (US)

(74) Representative: Cotter, Ivan John et al
D. YOUNG & CO. 10 Staple Inn
London WC1V 7RD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to the processing of sensor signals from light detectors.

A microbend fibre optic sensor unit can be used in a vortex shedding flowmeter. In such flowmeters, an optical cable or fibre is held between microbend jaws. One of the jaws is connected to a sensor beam which is exposed to a flow of fluid that has fluid vortices generated therein. The frequency of the fluid vortex generation (called shedding) is a measure of the flow rate for the fluid. Each time a vortex is shed, the sensor beam is moved. The movement is transferred to the microbend jaws which then bend the optical cable or fibre. In this way, light which is passing through the optical cable is modulated thus giving a signal corresponding to the passage of the vortices.

Vortex shedding flowmeters using a light barrier, which comprises a light source and spaced apart light detector are known, for example, from US Patent No. US—A—4 519 259 (Pitt et al). US Patent No. US—A—4 270 391 (Herzl) discloses an electronic arrangement for processing signals from a vortex shedding flowmeter.

For any sensor, voltage and/or sensor current signals from the sensor must either be compatible with circuitry for interpreting the signal, or be converted into signals which are compatible.

One industrially accepted transmission path for conveying signals from a snesor or transducer to interpreting circuitry is a two-wire analog transmission system.

Two-wire analog transmission systems are known. Such systems include a transmitter which is connected to a power supply by two wires which form a current loop. The transmitter includes, as at least one of its features, a transducer or sensor which senses a process variable such as flow rate, pressure or temperature.

The power supply is connected to the two wires to close the current loop. It is also known to provide a resistor in the current loop. The transmitter amplifies the signal from its transducer and this amplified signal is used to draw a certain current from the power supply which is proportional or otherwise related to the process variable. It is conventional to draw from a minimum of 4 mA to a maximum of 20 mA. The current between 4 and 20 mA passes through the resistor to produce a voltage drop across the resistor. This voltage drop can be measured to give a value for the process variable.

The electronics for a two-wire, 4—20 mA industrial control transmitter, however, have only about 3.5 mA and 10 volts with which to operate. Fibre optic systems presently require several mA for the light emitter, often 200 mA or greater, and as such are not compatible with two-wire, 4—20 mA transmitters.

Although the current drawn by the transmitter goes up above the 4 mA minimum as the process variable being measured changes, present transmitters only use the 4 mA to operate their circuitry and sensor. An additional 16mA is available at the upper end of the signal range if the circuitry is capable of utilising it.

Our European Patent Application Publication No. EP—A—0 165 697 discloses a method of (and an apparatus for) processing a sensor signal from a light detector at one end of an optic fibre, which signal is modulated—in accordance with a property being sensed—between maximum and minimum levels by the optic fibre, the optic fibre receiving light in pulses from a light emitter, the method (apparatus) being as set forth in the precharacterising part of Claim 1 (Claim 5) of the present application.

The present invention provides such a method and apparatus, characterised in that said sample hand held signal is used to vary the frequency of the pulsed drive signal so as to maximise the current available to the light emitter.

A preferred embodiment of the present invention described in detail hereinbelow provides electrical circuitry for sensors, such as vortex shedding flowmeters, which utilise fibre optic readouts. More particularly, it provides a method and apparatus for utilising the fibre optic readout for operations in a two-wire 4 to 20 mA format.

Pulse mode, or low-duty-cycle operation, is necessary to utilise a fibre optic sensor in a 4—20 mA transmitter. The preferred embodiment of the present invention provides a method of achieving such low-duty-cycle operation and associated techniques to make it suitable for use in a two-wire 4—20 mA vortex shedding flowmeter transmitter.

The maximum pulse frequency, for a given pulse width, is limited by the power available. Reducing the pulse width decreases the power needed, but the speed of available circuits, with the capability of low-power operation, limits the maximum pulse width. The bandwidth for the transmitter is limited as signal frequencies are restricted to less than half of the pulse (or sample) frequency to prevent aliasing or frequency foldover about the sampling frequency.

The preferred embodiment operates in a variable pulse rate mode with the circuit current using the majority of the total current. The signal driving the output stage that controls the 4—20 mA current is used to vary the rate of the pulses in a predetermined manner so that the maximum amount of the total current is available to the optic sensing system.

In the preferred embodiment, a sensor, typically but not exclusively a microbend fibre optic unit, providing variable light attenuation controlled by a process variable being measured, may be used. A microbend sensor modulates the received light by only a small amount (in the region of 2% maximum) in a vortex shedding flowmeter application. The electronics must make this small change into a full-scale output. This is accomplished by bucking the signal from the light detector and amplifying it. The bucking is controlled by a feedback circuit so that the average height of the peaks of the pulsed light signal are controlled to a fixed level. This control has a long time-constant so that rapid changes in the signal, the vortex shedding frequencies, are passed. These frequencies are demodulated from the pulse signals by sample and hold circuits and used to control the 4—20 mA output. Power is gated to a preamplifier circuit in order to save power. The preamplifier is a programmable current operational amplifier. High current operation is necessary to amplify the fast pulses from the fibre optics. However, the low current mode is adequate during the off period of the sampling. Gating the current to the preamplifier in conjunction with the optic system pulse results in significant power savings.

The preferred embodiment of the invention thus provides a method and circuit for generating and processing signals of an optic fibre which produces output signals compatible with a two-wire 4—20 mA arrangement.

The invention will now be further described, by way of illustrative and non-limiting example, with reference to the accompanying drawings, in which:

Figure 1 is a block diagram showing an apparatus or arrangement embodying the invention;

Figure 2 is a schematic diagram showing a circuit for realising the arrangement of Figure 1;

Figure 3 is a graph showing a current waveform for a light emitting diode (LED) used as a light transmitter to an optic fibre in the arrangement embodying the invention;

Figure 4 is a graph showing a peak following sample and hold action employed in the arrangement embodying the invention;

Figure 5 is a graph showing the action of a second sample and hold circuit of the arrangement embodying the invention; and

Figure 6 is a graph showing pulse modulation for a preamplifier in a circuit which receives signals from a light detector connected to the optic fibre.

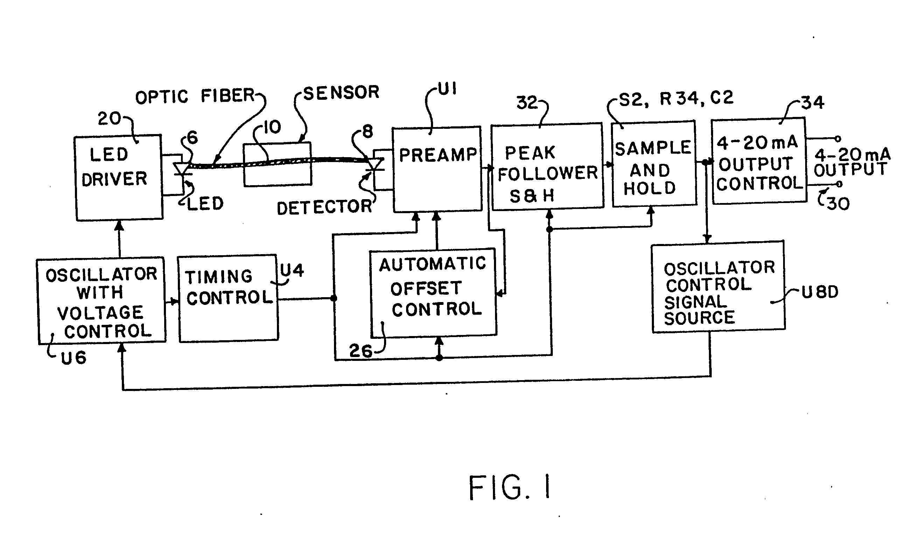

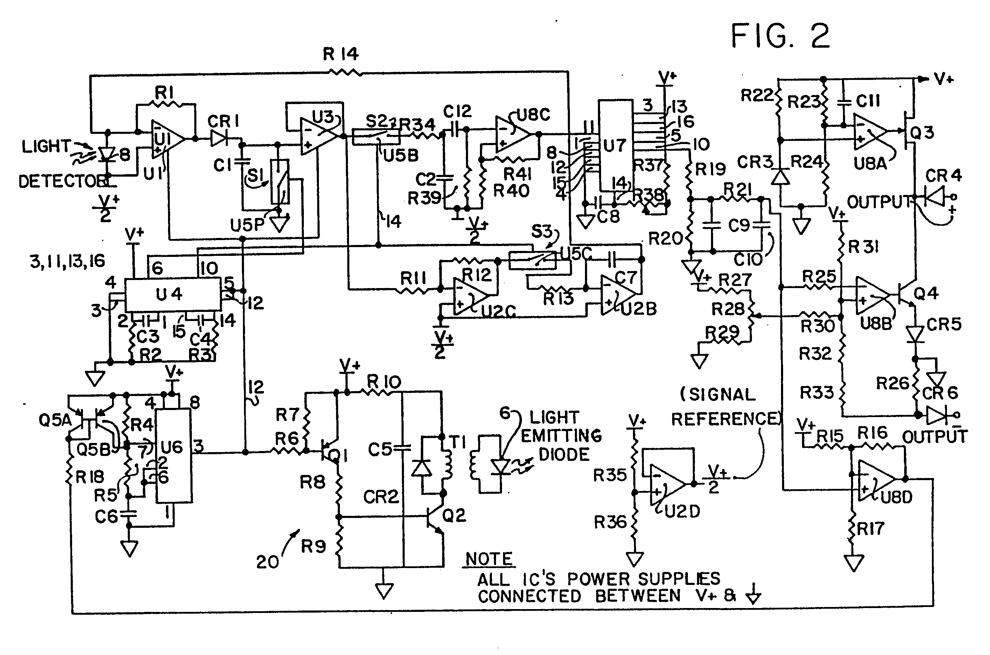

Figure 1 of the drawings shows an arrangement or apparatus embodying the invention for processing signals from an optic fibre or fibre optic cable 10 which are compatible with a two-wire 4—20 mA transmission line 30. The arrangement (also referred to hereinafter as a transmitter or transmitter circuit) includes a light emitting diode (LED) driver 20 which is connected to an LED 6. The LED 6 is connected to one end of the optic fibre 10 and emits light pulses into the optic fibre. A light detector 8, such as a light sensitive diode, is connected to the opposite end of the optic fibre 10. A signal from the detector 8 is processed by a preamplifier U1. An oscillator U6 with voltage control is connected to the LED driver 20 for supplying driving pulses for the LED 6. The oscillator U6 also drives a timing control U4 which supplies control signals to the preamplifier U1, an automatic effect control 26, a peak follower sample and hold circuit 32 which is made up of a diode CR1, a capacitor C1 and an operational amplifier U3 (see Figure 2), and a sample and hold circuit which is made up of a switch S2, a resistor R34 and a capacitor C2.

A control input for the oscillator U6 is provided by an oscillator control signal source (integrated circuit amplifier) U8D. Signals from the sample and hold circuit S2, R34, C2 are supplied to a 4—20 mA output control 34 (ncluding amplifiers U8A and U8B shown in Figure 2) which supplies a current signal to the transmission line 30.

Figure 2 is a schematic of electronics suitable for a readout of a fibre optic microbend sensor as used in a vortex shedding flowmeter.

Current to the LED 6 is supplied as a series of pulses, typically having a duty cycle of 1 to 2% an amplitude of 200 mA and a variable repetition rate or frequency. The duty cycle changes as the pulse width is fixed and the frequency is changed.

The oscillator U6, which typically is a low-power CMOS version of a 555 timer integrated circuit such as a 7555, is used to generate the control signal for the LED current. A dual transistor, having halves Q5A and Q5B, forms a current mirror circuit and supplies a current to the timer integrated circuit U6 to increase the rate at which a capacitor C6 charges. This decreases the time to charge and increses the frequency of the pulses generated by the circuit. (The capacitor C6 and resistors R4 and Rare connected as shown). The input to the current mirror circuit is determined by the integrated circuit amplifier U8D. Resistors R15, R16 and R17 are associated with the amplifier U8D. An input to the amplifier U8D is a voltage on a capacitor C10 which is used to drive a 4—20 mA output stage (the amplifier U8B and a transistor Q4). The difference between this voltage and a reference voltage determined by the resistors R15 and R17 and a power supply voltage V+ is amplified and biased so that the current mirror circuit is cut off when the transmitter's output is 4 mA. The circuit supplies a voltage to a resistor R18 and the current mirror circuit formed by the dual transistor Q5A and Q5B that will cause the frequency of the oscillator U6 to go to a maximum when the transmitter's output is 20 mA.

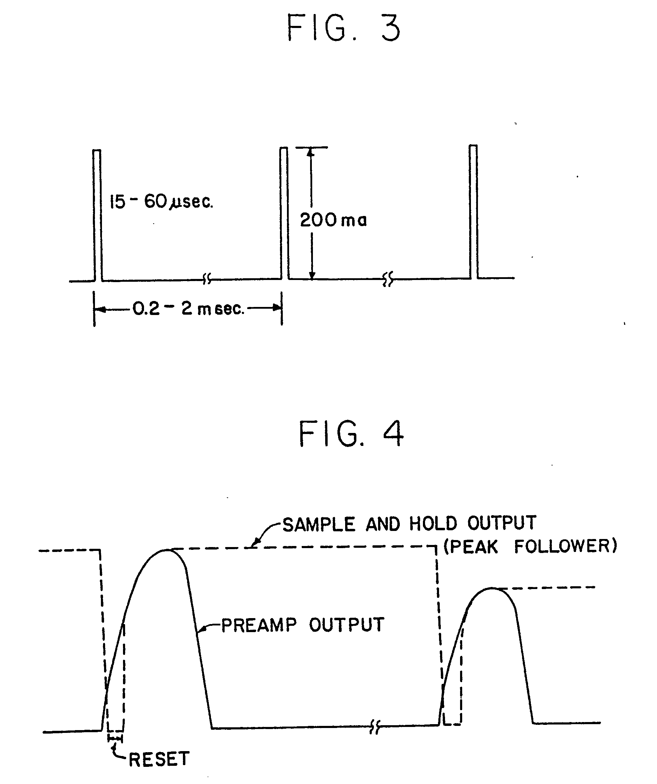

Transistors Q1 and Q2 amplify the output of the oscillator U6. The oscillator U6 is connected to the base of the transistor Q1 via a resistor R6 and a resistor R7 is connected between the base and emitter of the transistor Q1. A transformer T1 serves to match the drive requirements of 1.5 volts of the LED 6 to the circuit's higher drive voltage of, typically, 6 to 10 volts. The transformer T1 is typically a pulse transformer with a 4:1 turns ratio. A diode CR2 is connected across the transformer T1 as shown. A resistor R10 and a capacitor C5 serve to keep the high pulses of current to the optical system from creating voltage pulses on the power supply for the rest of the transmitter circuit. the capacitor C5 supplies high peak currents for the pulses of the LED 6 and stores charge between the LED pulses. Thus, the LED current primarily comes from the charge stored in the capacitor C5. Figure 3 shows the current waveform to the LED 6.

As mentioned above, the light pulses are transmitted to the light detector 8 by the optic fibre or fibre optic cable 10 shown in Figure 1. Varying attenuation is effected, typically by application of bending to the fibre 10 or by changing of coupling at a discontinuity in the fibre. The light detector 8 converts the received light into an electrical signal, typically a current. In the circuit of Figure 2, the detector 8 supplies a current to the following circuit:

The preamplifier U1, which has an associated feedback resistor R1, converts the detector current pulses into voltage pulses. An integrated circuit used as the preamplifier U1 must be capable of low power operation and have sufficient bandwidth and speed to faithfully amplify the pulses. A type TLC251 integrated circuit available from Texas Instruments is a programmable CMOS operational amplifier which meets these requirements. In a low-current mode, it meets the power requirements. In a high-current mode, it has the bandwidth necessary for amplifying the pulses. The amplifier U1 is switched into the high power and high bandwidth mode only when an LED pulse is present, being controlled by the drive signal over a line 12. Thus, it does not draw high power during periods when high power is not necessary for the circuit's operation.

The peak-following sample and hold function of the peak follower sample and hold circuit 32 of Figure 1 is performed by the combination of the capacitor C1, the diode CR1 and a switch S1 (part of an integrated circuit U5). The switch S1 discharges the voltage on the capacitor C1 at the beginning of a light pulse. The switch S1 is controlled by a one-shot multivibrator circuit in the timing control U4 (an MC14538 or MC14528 integrated circuit) which is triggered by the beginning of the pulse to the LED6 on the line 12. Then, the capacitor C1 charges through the diode CR1 from the output of the preamplifier U1. The capacitor C1 stops charging at the peak of the output of the preamplifier U1 and the diode CR1 prevents the immediate discharge necessary to follow the downside of the pulse. Figure 4 shows this operation. An operational amplifier U3 buffers the voltage on the capacitor C1, allowing the following circuitry to operate without affecting the signal on the capacitor C1. The operational amplifier U3 has the same bandwidth and speed requirements as the preamplifier U1 and, as such, may comprise a TLC251 operational amplifier with its power and operation switched in the same manner as the preamplifier U1.

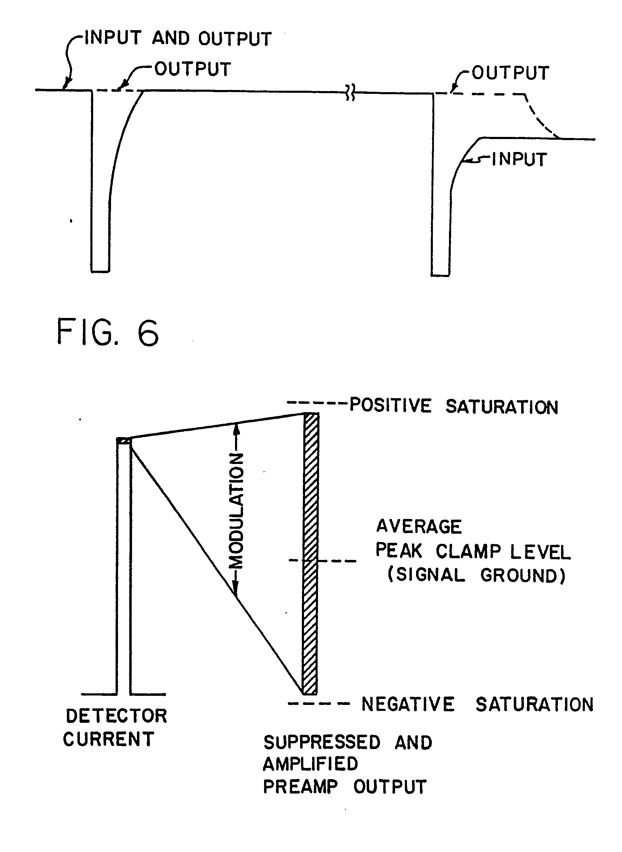

A second sample and hold action is performed by the switch S2 (part of the integrated circuit U5), the resistor R34 and the capacitor C2. The switch S2 is closed after the LED pulse has finished, as controlled via a line 14 from the timing control U4. (The timing control U4 has associated resistors R2, R3 and capacitor C3, C4). The peak of the pulse, as stored on the capacitor C1, is sampled and stored in the capacitor C2. The resistor R34 and capacitor C2 perform a low-pass filtering action to reduce the sampling frequency (LED pulse frequency) component from the signal received from the optical system. Figure 5 shows the output of this circuit.

Operational amplifiers U2B and U2C form a feedback control loop together with associated resistors R11, R12, R13 and an associated capacitor C7. This loop compares the peaks of the pulses with signal ground and returns a current to an input of the preamplifier U1, via a resistor R14, to drive the peaks back to ground. This is necessary since the pulses are quite large and are sufficient to drive the preamplifier U1 into saturation. Figure 6 shows the signal and the typically 2% maximum modulation. The effect of this circuit on the signal is also shown. The operational amplifier U2B acts as an integrator (or low pass filter) so that the adjustment effect is slow-acting. Thus, long term variations are removed and signal components are not affected. A switch S3 (part of the integrated circuit U5) controls the operation of this loop so that it only operates immediately following the end of the pulse to the LED 6. This removes any influence from decay of the voltage on the capacitor C1 between signal pulses.

An internal power supply is regulated by the amplifier U8A and components associated therewith, including a series pass field effect transistor (FET) Q3, a diode CR3, resistors R22, R23 and R24, and a capcitor C11. An operational amplifier U2D divides the internal power supply, typically 10 volts, into two 5-volt supplies with signal ground in the middle. This allows for operation of amplifiers that have voltage swings above and below signal ground. Resistors R35, R36 are associated with the amplifier U2D.

The typically low level sine wave signal from the second sample and hold circuit S2, R34, C2 is operated on by a hysteresis comparator U8C, which has associated resistors R39, R40 and R41 and is coupled to the resistor R34 via a capacitor C12. The hysteresis comparator U8C converts the sine wave signal to a rectangular or square wave. This rectangular or square wave is used to trigger a one-shot multivibrator U7 (which has associated therewith a capacitor C8 and resistors R37 and R38) to give a fixed length, fixed amplitude pulse for each cycle of the sine wave signal from the optical system. This is then averaged by a resistor R19 and a capacitor C9 (the capacitor C9 has a resistor R20 connected across it and is connected to the capacitor C10 via a resistor R21) and used to control the 4—20 mA output signal, available via diodes CR4 and CR6, by the circuit comprising the operational amplifier U8B, the transistor Q4 and resistors R25 and R33 and a diode CR5 associated therewith.

The embodiment of the present invention described above thus provides a method of utilising a fibre optic readout using a microbend or other sensor of similar characteristics, in particular the readout of a vortex shedding flowmeter that operates in a two-wire 4—20 mA format. The arrangement overcomes the power requirement restrictions in the application of current fibre optic techniques to such a transmitter.

## Claims

1. A method of processing a sensor signal from a light detector (8) at one end of an optic fibre (10), which signal is modulated—in accordance with a property being sensed—between maximum and minimum levels by the optic fibre (10), the optic fibre (10) receiving light in pulses from a light emitter (6), the method comprising:

preamplifying the sensor signal using a preamplifier (U1) having high and low current modes, the high current mode having a broad bandwidth for amplifying the sensor signal, the amplified sensor signal having positive and negative saturation levels for the preamplifier (U1) which correspond, respectively, to the maximum and minimum modulated signal levels;

clamping (U2C, U2B) an average saturation level between the positive and negative saturation levels, as a signal ground and at a long time constant with respect to changes in the modulated sensor signal so that rapid changes in the sensor signal pass;

generating (U8D, U6) a pulsed drive signal and applying said drive signal to the light emitter (6) to light the light emitter in pulses:

applying the drive signal to the preamplifier (U1) for switching the preamplifier into its high current mode only during pulse widths of pulses in the drive sginal, the preamplifier being switched to its low-current mode at other times;

sampling and holding (C1, CR1, S1) peaks of the amplified sensor signal from the preamplifier (U1) at a rate controlled by said drive signal to produce a peak-following sample and hold signal;

low pass filtering (R34, C2) the peak-following sample and hold signal at a frequency of the drive signal to reduce a sampling frequency component on the peak-following sample and hold signal, which component is attributable to the drive signal, to form a sampled and held signal;

applying the sampled and held signal to a current output control (34) which generates a current level to be transmitted along a two-wire transmission path (30), said current being proportional to the sensor signal from the light detector; and

supplying current to the current output control (34) and to means (U8D, U6) for generating said pulsed drive signal for the light emitter;

characterised in that said sampled and held signal is used to vary the frequency of the pulsed drive signal so as to maximise the current available to the light emitter (6).

2. A method according to Claim 1, including operationally amplifying the peak-following sample and hold signal using an operational amplifier (U3) which has low and high current modes and a bandwidth response similar to that of the preamplifier (U1), and switching the operational amplifier (U3) to its high current mode using the drive signal and only during pulses of the drive signal, the operational amplifier (U3) being switched to its low current mode at all other times.

3. A method of sensing a physical property, which comprises microbending an optic fibre (10) so as to modulate a sensor signal and processing the sensor signal in accordance with Claim 1 or Claim 2.

4. A method according to claim 3, including microbending the optic fibre (10) by sensing vortices generated in fluid which passes a vortex shedding flowmeter.

5. Apparatus for processing a sensor signal from a light detector (8) at one end of an optic fibre (10), which signal is modulated—in accordance with a property being sensed—between maximum and minimum levels by the optic fibre (10), the optic fibre receiving light in pulses from a light emitter (6), the apparatus comprising:

a preamplifier (U1) connected to the light detector (8) for amplifying the sensor signal, the preamplifier having high and low current modes of operation with a high bandwidth in its high current mode;

clamping means (U2C, U2B) for clamping the amplified sensor signal at an average level between positive and negative saturation levels for the preamplifier, as a signal ground, the clamping means having a long time constant with respect to changes in the modulated sensor signal so that rapid changes in the sensor signal pass;

drive signal generating means (U8D, U6) for generating a pulsed drive signal, the drive signal generating means being connected to the light emitter (6) for lighting the light emitter in pulses;

peak-following sample and hold means (C1, CR1, S1) connected to the clamping means (U2C, U2B) for generatikg a peak-following sample and hold signal which follows peaks of the amplified sensor signal;

low-pass filter means (R34, C2) connected to the peak-following sample and hold means (C1, CR1, S1) for filtering out a frequency component of said drive signal from the peak-following sample and hold signal, the low-pass filter means (R34, C2) being operative to generate a sampled and held signal;

current control means (34) connected to the low-pass filter meas (R34, C2) for receiving said sampled and held signal and generating a current signal, corresponding to said sensor signal, to be transmitted along a two-wire transmission path; and

means for supplying current to the current control means (34) and to the drive signal generating means (U8D, U6);

characterised in that the drive signal generating means (U8D, U6) is responsive to said sampled and held signal to vary the frequency of the pulsed drive signal so as to maximise the current available to the light emitter (6).

6. Apparatus according to Claim 5, wherein the peak-following sample and hold means (C1, CR1, S1) includes an operational amplifier (U3) having high and low current modes and a bandwidth characteristic similar to that of the preamplifier (U1), the preamplifier (U1) and the operational amplifier (U3) being arranged to be controlled by said drive signal from the drive signal generating means (U8D, U6) to switch to the high current mode only during pulses of said drive signal.

## Patentansprüche

1. Verfahren zum Verarbeiten des Sensorsignales von einem Lichtdetektor (8) an einem Ende einer optischen Faser (10), wobei das Signal gemäß einer zu erfassenden Eigenshaft zwischen Maximal- und Minimalwerten durch die optische Faser (10) moduliert ist, wobei die optische Faser (10) Licht in Form von Pulsen von einem Lichtsender (6) empfängt, und wobei das Verfahren die folgenden Schritte aufweist:

Vorverstärken des Sensorsignals unter Verwendung eines Vorverstärkers (U1), welcher Betriebsarten für hohen Strom und für niedrigen Strom hat, wobei die Hochstrombetriebsart eine große Bandbreite für das Verstärken des Sensorsignals besitzt und das verstärkte Sensorsignal positive und negative Sättigungswerte für den Vorverstärker (U1), hat, welche jeweils den maximalen und minimalen modulierten Signalwerten sprechen;

Festlegen (U2C, U2B) eines durchschnittlichen Sättigungswertes zwischen den positiven und negativen Sättggungswerten als Signalbezugsmasse und mit einer langen Zeitkonstanten bezüglich Änderungen des modulierten Sensorsignals, so daß schnelle Änderungen des Sensorsignals durchlaufen;

Erzeugen (8UD, U6) eines gepulsten Treibersignals und Anlegen des Treibersignals an den Lichtsender (6), um den Lichtsender in Pulsen zum Leuchten zu bringen;

Anlegen des Treibersignals an den Vorverstärker (U1) zum Schalten des Vorverstärkers in seine Hochstrombetriebsart nur während der Pulsbreiten der Pulse des Treibersignals, wobei der Vorverstärker während der anderen Zeiten in seine Niederstrom-Betriebsart geschaltet wird;

Abtasten und Speichern (C1, CR1, S1) der Spitzen des verstärkten Sensorsignales von dem Vorverstärker (U1) mit einer Rate, die durch das Treibersignal gesteuert wird, um ein den Spitzen folgendes Tast- und Speichersignal zu erzeugen;

Tiefpaßfiltern (R34, C2) des den Spitzen folgenden Tast- und Haltesignals mit einer Frequenz des Treibersignals, um die Tastfrequenzkomponente auf dem den Spitzen folgenden Tast- und Speichersignal zu reduzieren, welche dem Treibersignal zuzuordnen ist um ein abgetastetes und gespeichertes Signal zu bilden;

Anlegen des abgetasteten und gespeicherten Signals an eine Stromausgangssteuerung (34), welche einen Stromwert erzeugt, der enthlang eines Zweidrahtübertragungsweges (30) übertragen werden soll, wobei der Strom proportional zu dem Sensorsignal des Lichtdetektors ist; und

Zuführen eines Stromes zu der Stromausgangssteuering (34) und zu einer Einrichtung (U8D, U6) zum Erzeugen des gepulsten Antriebssignales für den Lichtsender;

dadurch gekennzeichnet, daß das abgetastete und gespeicherte Signal verwendet wird, um die Frequenz des gepulsten Treibersignals so zu verändern, daß der für den Lichtsender (6) zur Verfügung stehende Strom maximal wird.

2. Verfahren nach Anspruch 1, einschließlich des Schrittes, daß im Betrieb das den Spitzen folgende Tast- und Haltesignal unter Verwendung eines Operationsverstärkers (U3) verstärkt wird, welcher Nieder- und Hochstrombetriebsarten und ein Bandbreiten-Ansprechverhalten ähnlich dem des Vorverstärkers (U1), hat, und daß der Operationsverstärker (U3) in seine Hochstrombetriebsart geschaltet wird unter Verwendung des Treibersignals und nur während der Pulse des Treibersignals, während er zu allen anderen Zeiten in seine Niederstrombetriebsart geschaltet ist.

3. Verfahren zum Erfassen einer physikalischen Eigenschaft, welches ein Mikrobiegen einer optischen Faser (10) aufweist, um so ein Sensorsignal zu modulieren und das Sensorsignal gemäß Anspruch 1 oder Anspruch 2 zu verarbeiten.

4. Verfahren nach Anspruch 3, einschließlich des Mikrobiegens der optischen Faser (10) durch Abfühlen von Wirbeln, welche in einem Fluid erzeugt werden, welches durch ein wirbelablösendes Flußmeßgerät hindurchtritt.

5. Vorrichtung zum Verarbeiten eines Sensorsignales von einem Lichtdetektor (8) an einem Ende einer optischen Faser (10), wobei das Signal—gemäß einer abzufühlenden Eigenschaft—zwischen Maximal- und Minimalwerten durch die optische Faser (10) moduliert wird, und wobei die optische Faser Licht in Pulsen von einem Lichtsender (6) empfängt und die Vorrichtung aufweist:

einen Vorverstärker (U1), welcher mit dem Lichtdetektor (8) zum Verstärken des Sensorsignales verbunden ist, wobei der Vorverstärker Hoch- und Niederstrombetriebsarten hat, mit großer Bandbreite in der Hochstrombetriebsart;

eine Festlegeeinrichtung (U2C, U2B) zum Festlegen des verstärkten Sensorsignales bei einem Durchschnittswert zwischen den positiven und negativen Sättigungswerten des Vorverstärkes als eine Signalmasse, wobei die Festlegeeinrichtung eine lange Zeitkonstante bezüglich Änderungen des modulierten Sensorsignales, hat, so daß schnelle Änderungen des Sensorsignales hindurchlaufen;

eine Treibersignalerzeugungseinrichtung (U8D, U6) zum Erzeugen eines gepulsten Treibersignales, wobei die Treibersignalerzeugungseinrichtung mit dem Lichtsender (6) verbunden ist, um den Lichsender in Pulsen zum Leuchten zu bringen;

eine Spitzen folgende Tast- und Speichereinrichtung (C1, CR1, S1), welche mit der Feststelleinrichtung (U2C, U2B) verbunden ist, um ein Spitzenfolger-Tast- und Speichersignal zu erzeugen, welches den Spitzen des verstärkten Sensorsignales folgt;

eine Tiefpaßfiltereinrichtung (R34, C2), welche mit der Spitzenfolger-Tast- und Speichereinrichtung (C1, CR1, S1) verbunden ist, um eine Frequenzkomponente des Treibersignals aus dem Spitzenfolger-Tast- und Haltesignal herauszufiltern, wobei die Tiefpaßfiltereinrichtung (R34, C2) so betreibbar ist, daß si ein getastetes und gespeichertes Signal erzeugt;

eine Stromsteuereinrichtung (34), welche mit der Tiefpaßfiltereinrichtung (R34, C2) verbunden ist, um das getastete und gespeicherte Signal zu empfangen und um, entsprechend dem Sensorsignal, ein Stromsignal zu erzeugen, welches entlang eines Zweidrahtübertragungsweges übertragen werden soll; und

Mittel für die Zufuhr von Strom zu der Stromsteuereinrichtung (34) und zu der Treibersignalerzeugungseinrichtung (U8D, U6);

dadurch gekennzeichnet, daß die Treibersignalerzeugungseinrichtung (U8D, U6) auf das getastete und gespeicherte Signal anspricht, um die Frequenz des gepulsten Treibersignales so zu verändern, daß der für den Lichtsender (6) zur Verfügung stehende Strom maximal wird.

6. Vorrichtung nach Anspruch, 5, wobei die Spitzenfolger-Tast- und Speichereinrichtung (C1, CR1, S1) einen Operationsverstärker (U3) einschließt, welcher Hoch- und Niederstrombetriebsarten sowie eine Bandbreitencharakteristik hat, die ähnliche der des Vorverstärkers (U1) ist, wobei der Vorverstärker (U1) und der Operationsverstärker (U3) so angeordnet sind, daß sie von dem Treibersignal von der Treibersignalerzeugungseinrichtung (U8D, U6) gesteuert werden, um die Hochstrombetriebsart nur während der Pulse des Treibersignals einzuschalten.

## Revendications

1. Procédé de traitement d'un signal de capteur en provenance d'un détecteur de lumière (8) à une extrémité d'une fibre optique (10), ce signal étant modulé, conformément à une caractéristique en cours de mesure, entre des niveaux maxima et minima par la fibre optique (10), la fibre optique (10) recevant de la lumière sous la forme d'impulsions à partir d'un émetteur de lumière (6), le procédé consistant à:

préamplifier le signal de capteur à l'aide d'un préamplificateur (U1) comportant des modes à courant élevé et à faible courant, le mode à courant élevé ayant une largeur de bande importante pour amplifier le signal de capteur, le signal de capteur amplifié présentant des niveaux de saturation positifs et négatifs pour le préamplificateur (U1) qui correspondent, respectivement, aux niveaux de signal modulé maxima et minima;

verrouiller (U2C, U2B) un niveau de saturation moyen entre les niveaux de saturation positifs et négatifs, en tant que terre du signal et à une grande constante de temps par rapport aux modifications du signal de capteur modulé de manière à permettre le passage de modifications rapides du signal de capteur;

produire (U8D, U6) un signal de pilotage pulsé et appliquer ledit signal de pilotage à l'émetteur de lumière (6) pour que l'émetteur de lumière émette de la lumière sous la forme d'impulsions;

appliquer le signal de pilotage au préamplificateur (U1) pour commuter le préamplificateur à son mode à courant élevé uniquement pendant les largeurs d'impulsions des impulsions du signal de pilotage, le préamplificateur étant commuté à son mode faible courant aux autres moments;

échantillonner et bloquer (C1, CR1, S1) les crêtes du signal de capteur amplifié en provenance du préamplificateur (U1) à un taux commandé par ledit signal de pilotage afin de produire un signal d'échantillonnage et de blocage suiveur de crête;

à effectuer un filtrage passe-bas (R34, C2) du signal d'échantillonnage et de blocage suiveur de crête à une fréquence du signal de pilotage pour réduire une composante de fréquence d'échantillonnage du signal d'échantillonnage et de blocage suiveur de crête, cette composante étant imputable au signal de pilotage, pour constituer un signal échantillonné et bloqué;

appliquer ledit signal échantillonné et bloqué à une commande de sortie de courant (34) qui produit un niveau de courant destiné à être transmis sur un chemin de transmission à deux fils (30), ledit courant étant proportionnel au signal de capteur en provenance du détecteur de lumière; et

fournir du courant à la commande de sortie de courant (34) et aux moyens (U8D, U6) pour engendrer ledit signal de pilotage pulsé destiné à l'émetteur de lumière;

caractérisé en ce que ledit signal échantilloné et bloqué est utilisé pour faire varier la fréquence du signal de pilotage pulsé de manière à rendre maximal le courant disponible pour l'émetteur de lumière (6).

2. Procédé selon la revendication 1, consistant en outre à amplifier opérationnellement le signal d'échantillonnage et de blocage suiveur de crête en utilisant un amplificateur opérationnel (U3) ayant des modes à courant faible et courant élevé et une caractéristique de largeur de bande analogues à ceux du préamplificateur (U1), et à commuter l'amplificateur opérationnel (U3) à son mode courant élevée en utilisant le signal de pilotage et seulement pendant les impulsions du signal de pilotage, l'amplificateur opérationnel (U3) étant commuté à son mode courant faible à tous les autres moments.

3. Procédé de détection d'une proprietée physique, qui consiste à effecteur une microflexion d'un fibre optique (10) de manière à moduler un signal de capteur, et à traiter le signal de capteur conformément à la revendication 1 ou à la revendication 2.

4. Procédé selon la revendication 3, comprenant la microflexion de la fibre optique (10) par la détection de tourbillons engendrés dans le fluide qui passe devant un débitmètre de mesure de tourbillons.

5. Appareil destiné à traiter un signal de capteur en provenance d'un détecteur de lumière (8) à une extrémité d'une fibre optique (10), ce signal étant modulé, conformément à une caractéristique en cours de mesure, entre des niveaux maxima et minima par la fibre optique (10), la fibre optique (10) recevant de la lumière sous la forme d'impulsions à pair d'un émetteur de lumière (6), l'appareil comprenant:

un préamplificateur (U1) relié au détecteur de lumière (8) pour amplifier le signal du capteur, le préamplificateur ayant des modes de fonctionnement en courant faible et courant élevé, sa largeur de bande étant importante dans son mode courant élevé;

des moyens de verrouillage (U2C, U2B) pour verrouiller le signal de capteur amplifié à un niveau moyen entre les niveaux de saturation positifs et négatifs pour le préamplificateur, en tant que terre du signal, les moyens de verrouillage ayant une longue constante de temps par rapport aux modifications du signal de capteur modulé de manière à permettre le passage de variations rapides du signal de capteur;

des moyens générateurs de signaux de pilotage (U8D, U6) pour produire un signal de pilotage pulsé, les moyens générateurs de signaux de pilotage étant reliés à l'émetteur de lumière (6) pour faire émettre des impulsions de lumière par l'émetteur de lumière;

des moyens échantillonneurs-bloquers suiveurs de crête (C1, CR1, S1) reliés aux moyens de verrouillage (U2C, U2B) pour produire un signal d'échantillonnage et de blocage suiveur de crête qui suit les crêtes du signal de capteur amplifié;

des moyens de filtrage passe-bas (R34, C2) reliés aux moyens échantillonneurs-bloqueurs suiveurs de crête (C1, CR1, S1) pour éliminer par filtrage du signal d'échantillonnage et de blocage suiveur de crête une composante de fréquence dudit signal de pilotage, les moyens de filtrage passe-bas (R34, C2) étant aptes à produire un signal échantillonné et bloqué;

des moyens de commande de courant (34) reliés aux moyens de filtrage passe-bas (R34, C2) pour recevoir ledit signal échantillonné et bloqué et produire un signal de courant, correspondant audit signal de capteur, destiné à être émis sur un chemin de transmission à deux fils; et

des moyens pour fournir du courant aux moyens de commande de courant (34) et aux moyens générateurs de signaux de pilotage (U8D, U6);

caractérisé en ce que les moyens générateurs de signaux de pilotage (U8D, U6) sont sensibles audit signal échantillonné et bloqué et font ainsi varier la fréquence du signal de pilotage pulsé de manière à rendre maximal le courant disponible pour l'émetteur de lumière (6).

6. Appareil selon la revendication 5, dans lequel les moyens échantillonneurs-bloquers suiveurs de crête (C1, CR1, S1) comportent un amplificateur opérationnel (U3) ayant des modes de fonctionnement à courant faible et courant élevé et une caractéristique de largeur de bande analogues à ceux du préamplificateur (U1), le préamplificateur (U1) et l'amplificateur opérationnel (U3) étant disposés de manière 6 être commandés par ledit signal de pilotage en provenance desdits moyens générateurs de signaux de pilotage (U8D, U6) pour être commutés au mode courant élevée uniquement pendant les impulsions dudit signal de pilotage.

FIG. I

FIG. 2

EP 0 234 680 B1

FIG. 3

15 - 60 μsec.

200 ma

|—— 0.2 - 2 m sec. ——|

FIG. 4

SAMPLE AND HOLD OUTPUT
(PEAK FOLLOWER)

PREAMP OUTPUT

RESET

INPUT AND OUTPUT
OUTPUT
OUTPUT
INPUT

FIG. 6

POSITIVE SATURATION

MODULATION

AVERAGE
PEAK CLAMP LEVEL
(SIGNAL GROUND)

NEGATIVE SATURATION

DETECTOR
CURRENT

SUPPRESSED AND
AMPLIFIED
PREAMP OUTPUT

4